# DEMANDE DE BREVET EUROPEEN

(11) **EP 0 582 523 A1**
(43) Date de publication de la demande: **09.02.1994**
(21) Numéro de dépôt: 93402015.7
(22) Date de dépôt: 04.08.1993
(51) Int. Cl.: E05B 49/00

(54) **Système d'antivol électronique pour véhicule à moteur**

(30) Priorité: 06.08.1992 FR 9209971
(71) Demandeur: Sellem, Albert, F-06220 Vallauris (FR); Iosca, François, F-06300 Nice (FR)
(72) Inventeur: Sellem, Albert, F-06220 Vallauris (FR); Iosca, François, F-06300 Nice (FR)
(74) Mandataire: Moncheny, Michel

(57) **Abrégé**

Ce dispositif électronique antivol (1) pour véhicule automobile disposant d'éléments fonctionnels conventionnels autorisant le contrôle du fonctionnement du véhicule, tels qu'une batterie d'accumulateurs électriques pour l'alimen- tation électrique générale du véhicule, un démarreur électrique et des freins, comporte:
- un boitier de télécommande (3) pour l'émission d'un code numérique porté notamment par un faisceau infrarouge, ledit boitier de télécommande coopérant avec un réceptacle (4) disposé dans l'habitacle du véhicule, de telle manière que ledit code numérique n'est émis que si le boitier de télécommande est disposé dans le réceptacle;
- une centrale électronique (5) comportant en entrée des moyens de réception (7) dudit code numérique, et reliée en sortie à un ou plusieurs desdits éléments fonctionnels de façon à contrôler leur fonctionnement en cas de réception dudit code numérique.

## Description

La présente invention concerne un dispositif électronique antivol pour un véhicule automobile disposant d'éléments fonctionnels conventionnels autorisant le contrôle du fonctionnement du véhicule, à savoir notamment une batterie d'accumulateurs électriques pour l'alimentation électrique générale du véhicule, un démarreur électrique, et des freins.

Devant la montée du nombre de vols de véhicules automobiles constatés ces dernières années, de nombreux dispositifs antivols ont été développés et commercialisés.

Ainsi, on connaît déjà dans l'état de la technique des dispositifs antivol agissant de façon mécanique sur un organe de commande du véhicule, notamment son volant ou sa pédale d'embrayage.

On connait aussi, d'après le FR-A-2 569 641, des dispositifs de sécurité contre l'utilisation non autorisée d'un véhicule, se présentant sous la forme d'une clé coopérant d'une part avec une serrure de portière, et d'autre part avec un logement situé sur le tableau de bord du véhicule. La clé combine les fonctions classiques d'ouverture ou de fermeture de serrures de portières ou d'actionnement de démarreur, avec une fonction électronique d'ouverture ou de fermeture d'un contact électrique commandant un agrégat de service du type allumage.

Bien que ce dernier dispositif présente une nette amélioration par rapport aux dispositifs antivol uniquement mécaniques, un certain nombre d'inconvénients subsistent, notamment le fait que ce dispositif antivol ne peut pas être actionné par une commande à distance, et que le codage ne fait pas de distinction entre l'ouverture des portes et l'actionnement des éléments fonctionnels du véhicule et porte sur un faible nombre de bits que l'on peut détecter par balayage. En outre, ce dispositif antivol ne comporte pas de moyen de signalisation d'un véhicule qui aurait été volé malgré la présence du dispositif antivol.

Du fait des insuffisances des dispositifs antivols connus, le nombre de véhicules volés par an se chiffre à plus de 300 000 par an en France seule, avec des chiffres analogues dans d'autres pays.

Etant donné cet état de la technique, l'invention a pour but de fournir un dispositif antivol pour véhicule automobile qui remédie à l'ensemble des inconvénients des dispositifs connus. En particulier, l'invention a pour but de proposer un dispositif antivol électronique agissant de façon distincte sur une pluralité de composants essentiels pour le fonctionnement du véhicule, tout en étant d'un emploi aisé en permettant son activation et sa désactivation par simple pression des touches d'un boitier de commande à distance. L'invention a encore pour but de proposer un dispositif antivol présentant une efficacité contre le vol jamais égalée à ce jour, tout en permettant un repérage aisé d'un véhicule ainsi équipé, si celui-ci devait malgré tout être volé.

A cet effet, l'invention concerne un dispositif électronique antivol pour véhicule automobile disposant d'éléments fonctionnels conventionnels autorisant le contrôle du fonctionnement du véhicule, à savoir notamment une batterie d'accumulateurs électriques pour l'alimentation électrique générale du véhicule, un démarreur électrique et des freins, caractérisé en ce qu'il comporte:
- un boitier de télécommande pour l'émission d'un code numérique porté notamment par un faisceau infrarouge, ledit boitier de télécommande coopérant avec un réceptacle disposé dans l'habitacle du véhicule de telle manière que ledit code numérique n'est émis que si le boîtier de télécommande est disposé dans le réceptacle;
- une centrale électronique comportant en entrée des moyens de réception dudit code numérique, et reliée en sortie à un ou plusieurs desdits éléments fonctionnels de façon à contrôler leur fonctionnement en cas de réception dudit code numérique.

Suivant d'autres caractéristiques de l'invention:
- ledit réceptacle comporte des moyens de commande de fermeture d'un contact électrique du boitier de télécommande lors du positionnement dudit boitier de télécommande dans ledit réceptacle, ledit contact électrique étant disposé dans les circuits électriques du boitier de télécommande de façon à empêcher l'émission dudit code numérique tant que ledit contact électrique est ouvert.
- lesdits moyens de commande de fermeture d'un contact électrique sont constitués par un dispositif magnétique, notamment un aimant permanent disposé à proximité du réceptacle, notamment sous la base de celui-ci, et ledit contact électrique est un contact électromagnétique qui se ferme sous l'effet dudit dispositif magnétique lorsque le boitier de télécommande est positionné dans le réceptacle.
- ledit boitier de télécommande comporte des moyens d'émission infrarouge dudit code numérique par actionnement d'un ensemble de touches de contact disposées sur ledit boitier, l'une desdites touches de contact contrôlant l'activation d'un premier élément fonctionnel du véhicule, notamment le verrouillage/déverrouillage des portes du véhicule par transmission et décodage dudit code numérique, et l'actionnement d'au moins une des autres touches commandant l'actionnement d'une pluralité d'autres éléments fonctionnels du véhicule, dès lors que ledit boitier de télécommande mobile est disposé dans son réceptacle.
- le boitier de télécommande est positionné dans le réceptacle de façon à ce que lesdits moyens d'émission infrarouge soient en vue directe desdits moyens de réception.
- le dispositif antivol comporte des moyens réflecteurs du faisceau infrarouge émis par le boitier de télécommande, ces moyens réflecteurs assurant la réflection du faisceau infrarouge selon une multitude de trajectoires, et lesdits moyens de réception étant disposés à l'intersection de l'une quelconque de ces trajectoires pour recevoir de façon indirecte le faisceau émis.
- lesdits moyens réflecteurs sont constitués par une bille cylindrique réfléchissante disposée sur le réceptacle, en vue directe du faisceau infrarouge émis par le boitier de télécommande.
- un code numérique est transmis lors de l'actionnement d'une touche de contact quelconque dudit boitier, ce code comportant un premier ensemble de bits d'identification secrets personalisés pour un dispositif électronique antivol déterminé, et un second ensemble de bits d'actionnement représentatif de la touche de contact particulière actionnée et correspondant à un ou plusieurs éléments fonctionnels particuliers du véhicule.
- ladite centrale électronique comporte des moyens pour fixer une séquence prédéterminée d'actionnement des éléments fonctionnels du véhicule et des moyens pour comparer l'ordre d'actionnement des touches de contact du boitier à cette séquence prédéterminée, lesdits éléments fonctionnels étant actionnés par la centrale uniquement si l'ordre d'actionnement des touches correspond à la séquence prédéterminée.
- lesdites autres touches provoquent l'actionnement des circuits électroniques de commande de déblocage des freins du véhicule, des circuits de commande de fermeture du circuit électrique général du véhicule, des circuits de commande de démarreur du véhicule, ou des circuits de commande d'ouverture d'électrovanne de carburant.
- ladite centrale électronique comporte:
   a) un circuit de réception et de pré-amplification d'infrarouge, lequel attaque des circuits de décodage du code d'accès transmis par le boitier de télécommande;
   b) un circuit de stockage d'un code de d'identification personalisé affecté au dispositif antivol considéré;
   c) des moyens de comparaison connectés audit circuit de décodage et audit circuit de stockage, de manière à comparer ledit code personalisé avec celui enregistré dans ledit circuit de stockage, et ne libérer la séquence des opérations ultérieures de commande du dispositif antivol électronique qu'en cas de coïncidence de ladite comparaison;
   d) des circuits de bascules générant des commandes d'actionnement lorsque ladite comparaison est positive, lesdites commandes d'actionnement étant transmises aux éléments fonctionnels correspondants du véhicule par l'intermédiaire de relais électriques disposés dans les circuits d'alimentation desdits éléments fonctionnels.
- lesdits circuits de stockage du code d'accès comprennent des premiers circuits logiques à registres à décalage disposés en anneau, et en ce que lesdits circuits de décodage comprennent des seconds circuits logiques à registres à décalage pour le décodage des bits d'actionnement des éléments fonctionnels, le décodage des bits d'identification n'étant autorisé que si le bon code d'accès à été décodé.
- le dispositif électronique antivol comprend en outre:
   a) une balise radioélectrique placée dans ledit véhicule et pourvue de moyens de déclenchement d'émission de la balise en cas d'intrusion forcée dans le véhicule, notamment par ouverture forcée des portes, du coffre ou du capot moteur du véhicule, ou par soulèvement de celui-ci;
   b) des moyens placés dans ledit boitier de télécommande pour neutraliser le fonctionnement de ladite balise radioélectrique lors de l'envoi de ladite commande d'ouverture des portes, notamment en utilisant un interrupteur à mercure.
- ladite balise comporte en outre des circuits de réception radiofréquence, le signal émis ou reçu utilisant une onde porteuse dont la fréquence est située dans une gamme de fréquences utilisée par les organismes de contrôle routier, de façon à faciliter le repérage par ces derniers d'un véhicule volé.
   D'autres caractéristiques et avantages du dispositif selon l'invention seront mieux compris en se référant à la description suivante faite à titre d'exemple nullement limitatif, et dans laquelle:
- La figure 1 représente un schéma de principe illustrant les principaux composants du dispositif antivol selon l'invention;
- la figure 2 représente une vue plus détaillée du boitier de télécommande par infrarouge du dispositif de la figure 1;
- la figure 3A représente un schéma électrique de préamplificateur de lumière infrarouge utilisé dans la partie fixe ou centrale du dispositif antivol;
- la figure 3B représente un schéma électrique d'une seconde partie du récepteur codé du dispositif antivol selon la figure 1.
- la figure 3C représente un schéma électrique d'une troisième partie du récepteur codé du dispositif antivol selon la figure 1.
- la figure 3D représente un schéma électrique d'une quatrième partie du récepteur codé du dispositif antivol selon la figure 1.
- la figure 3E représente un schéma électrique d'une cinquième partie du récepteur codé du dispositif antivol selon la figure 1.
- la figure 4 représente un schéma électrique d'une balise de signalisation de vol du dispositif antivol de la figure 1.

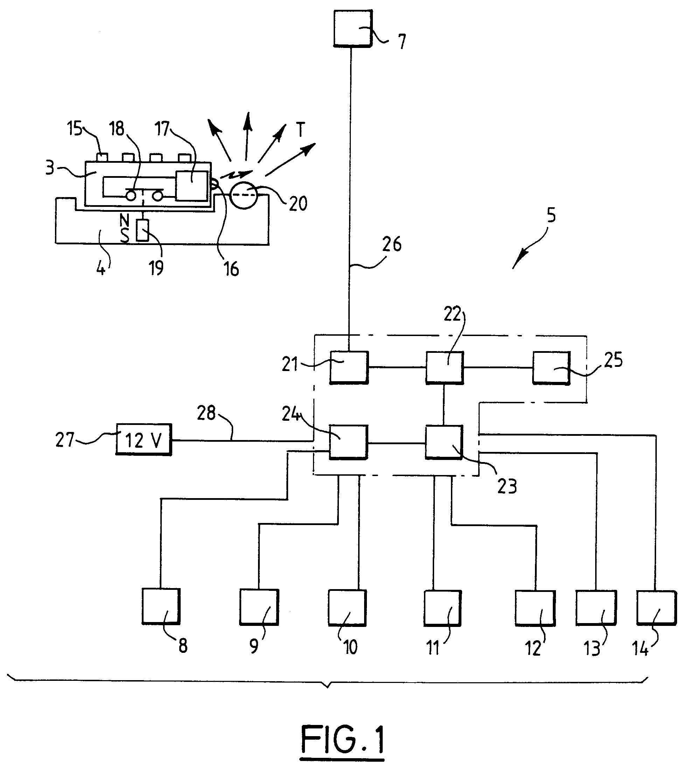

On se réfère à la figure 1.
Cette figure représente l'architecture générale du dispositif électronique antivol 1 selon l'invention. Ce dispositif 1 se compose principalement d'un boitier de télécommande mobile 3, d'un réceptacle ou support 4 du boitier 3, d'une centrale électronique 5 reliée en entrée à des moyens de réception 7, et connectée en sortie à un ensemble d'éléments fonctionnels (non représentés) du véhicule, par l'intermédiaire d'une série de contacts de coupure 8,9, 10,11,12,13,14.

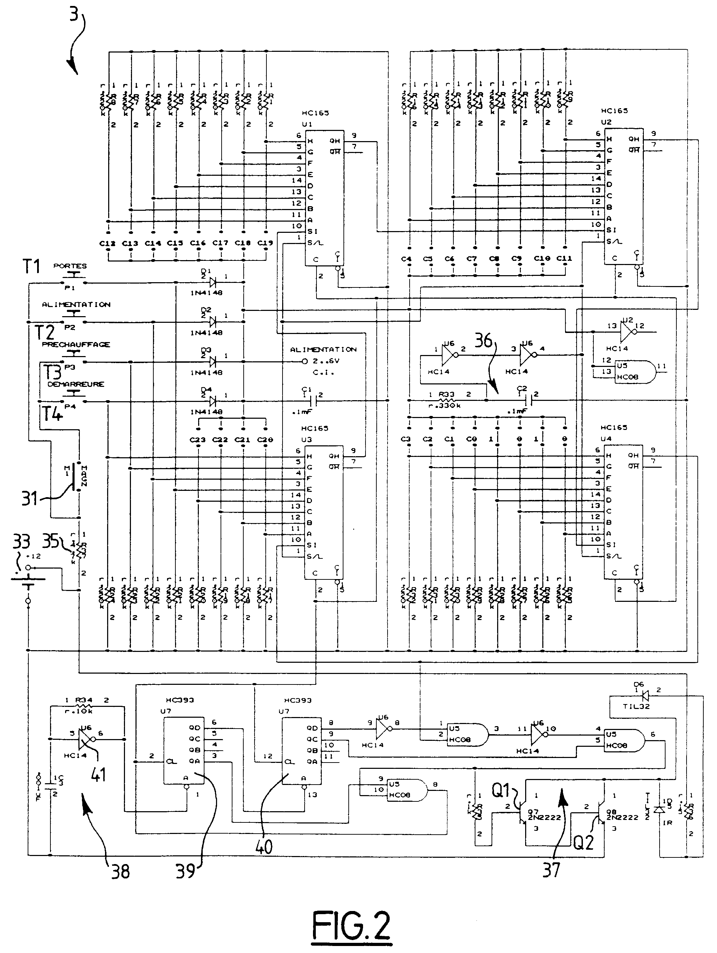

Le boitier de télécommande 3 comporte principalement des touches 15, des moyens d'émission 16 utilisant notamment un faisceau infrarouge ou tout autre rayonnement approprié et un circuit interne 17 pour élaborer et émettre des messages numériques codés, tel que décrit plus loin (figure 2).

Les circuits internes 17 du boitier de télécommande comportent un contact électrique 18, de préférence un contact électromagnétique normalement ouvert, et qui ne se ferme que sous l'action d'un dispositif magnétique, par exemple un aimant permanent 19 disposé à proximité du réceptacle 4. Selon un mode de réalisation de l'invention, le réceptacle à la forme d'un boitier dans lequel ou sous lequel est disposé l'aimant, l'ensemble étant fixé à tout endroit approprié dans l'habitacle. En particulier, le réceptacle 4 pourvu de son boitier 3 peut être disposé de sorte que les moyens d'émission infrarouge 16 du boitier 3 soient en vue directe des moyens de réception 7.

Alternativement, le dispositif électronique antivol 1 comporte des moyens réflecteurs du faisceau infrarouge émis par le boitier de télécommande 3. En particulier, ces moyens réflecteurs sont constitués par une bille cylindrique réfléchissante 20 disposée sur le réceptacle, et assurant la réflection du faisceau infrarouge selon une multitude de trajectoires T. Les moyens de réception 7 sont alors disposés à l'intersection de l'une quelconque de ces trajectoires de sorte à recevoir de façon indirecte le faisceau émis.

La centrale 5 est placée à un endroit quelconque du véhicule (non représenté), et est composée d'une pluralité de circuits électriques ou électroniques 7,21,22,23,24,25.

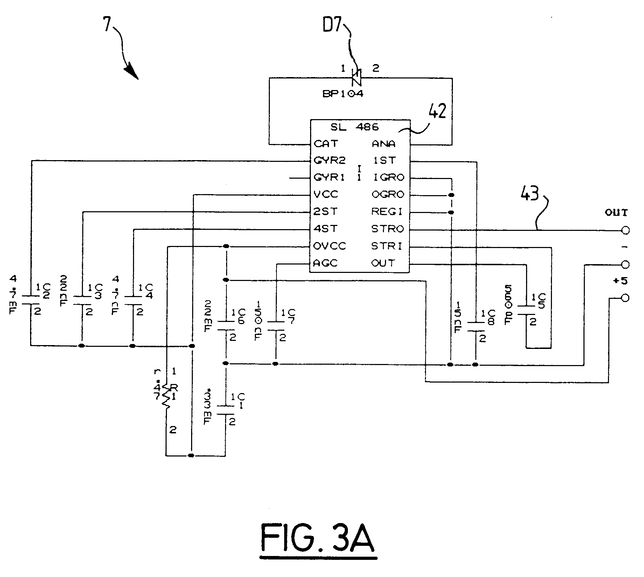

En particulier, la centrale fixe 5 comporte un récepteur 7 du rayonnement infrarouge émis par le boitier de télécommande 3, pour la conversion du signal lumineux infrarouge en un signal électrique. Ce récepteur 7 qui sera décrit en détail en relation avec la figure 3A, est pourvu d'une fonction d'amplification et de filtrage de la lumière naturelle, et est relié par un câble électrique 26 au reste de la centrale 5 pour le décodage des messages numériques codés et la génération de signaux de commande d'éléments fonctionnels du véhicule. La centrale 5 comporte encore une source d'alimentation générale 27 et une balise d'émission/réception radio-fréquence 25. Pour des véhicules pourvus d'une clé de contact et d'un blocage de direction du type "Neyman", le contact de clé est disposé sur le fil d'alimentation 28 de la centrale 5. Les circuits de coupure 8 à 14 reçoivent les signaux de commande précités et permettent de commander une pluralité d'éléments fonctionnels du véhicule en les privant de l'alimentation générale de celui-ci ou de la connexion à sa masse. Les circuits de coupure associés à des éléments fonctionnels du véhicule peuvent être de préférence disposés sur la même carte électronique que le reste des composants de la centrale 5, ou au contraire être disposés respectivement au droit des éléments fonctionnels du véhicule qu'ils doivent commander.

Dans un mode de réalisation de l'invention donné à titre d'exemple non limitatif, les éléments fonctionnels visés peuvent être constitués par les contacts d'ouverture/fermeture des portières du véhicule, du capot de coffre ou du capot moteur, les circuits électriques de commande des freins, du démarreur, de l'électrovanne d'injection d'essence, ou du circuit de préchauffage de gasoil (dans le cas de véhicules diesel), ou l'alimentation générale elle-même, ou tout autre élément fonctionnel utile du véhicule et pouvant être commandé par voie électrique.

L'ensemble des circuits électroniques du boitier de télécommande mobile 3 et de la centrale fixe 5 va maintenant être décrit en relation avec les figures plus détaillées 2, 3A à 3E et 4 .

On se réfère à la figure 2. Cette figure fait apparaître à titre d'exemple un schéma de réalisation du boitier de télécommande infrarouge 3, réalisé à l'aide de composants discrets et de quelques circuits intégrés.

Le boitier de télécommande 3 se présente sous la forme d'un petit boitier quelconque, par exemple en matière plastique (figure 1), portant sur l'un de ses cotés une pluralité de touches de contact 15, par exemple 4 touches (T1,T2,T3,T4) associées à la mise en service d'éléments fonctionnels du véhicule. Ainsi, la touche T1 est reliée à des circuits contrôlant le verrouillage/déverrouillage des portes et des capots du véhicule, la touche T2 commande la connection de l'alimentation électrique générale du véhicule et une électrovanne d'injection de carburant ou un électrocontact analogue, la touche T3 commande la connexion des circuits de préchauffage de gasoil (cas d'un véhicule diesel) ou la mise sous tension de la bobine d'allumage, et la touche T4 commande la mise sous tension du démarreur du véhicule et/ou la coupure de sa masse. A noter que plusieurs des touches précitées ont une borne connectée à un contact supplémentaire 31, notamment un contact magnétique coopérant avec l'aimant 19 asocié au réceptacle 4 tel que décrit précédemment, de sorte que ce contact 31 se ferme lorsque le boitier de télécommande 3 est disposé dans l'habitacle du véhicule et à proximité du réceptacle 4, ou de tout autre support portant l'aimant 19.

Dans le cas représenté, les touches de contact T3 et T4 sont en série avec le contact magnétique 31. De ce fait, bien que les portes du véhicule puissent être ouvertes et son alimentation générale mise en service par actionnement des touches T1 et T2 respectivement, la mise en route du démarreur du véhicule, ou de façon générale des éléments fonctionnels placés en série avec le contact 31, peut avoir lieu si et seulement si le boitier de télécommande 3 adéquat a préalablement été positionné par le propriétaire du véhicule sur le réceptacle du dispositif électronique antivol.

Lorsque le contact 31 est fermé, l'une des bornes de chaque touche de commande est reliée à la borne positive d'une batterie d'alimentation 33 du boitier de télécommande 3, par l'intermédiaire d'une résistance 35.

L'autre borne des touches T1 à T4 est chacune reliée à l'anode d'une diode D1 à D4. La cathode de chaque diode est reliée à un ensemble de barrettes de court-circuit C0 à C23. Ces barrettes sont individuellemnt ouvertes ou fermées par des courts-circuits selon que l'on désire générer un "1" ou un "0" logique pour le bit correspondant du code numérique à émettre par le boitier de télécommande 3. Ces barrettes sont connectées aux entrées de données de circuits intégrés U1,U2,U3,U4 (par exemple des 74HC165) composés de registres à décalage, par l'intermédiaire de résistances de polarisation R0 à R32.

Les registres à décalage U1,U2,U3,U4 permettent chacun de sérialiser 8 bits de code fournis en parallèle sur leurs entrées de données. Ces registres à décalage sont alors connectés en cascade pour obtenir un train de code de 32 bits. Ces 32 bits vont constituer la trame des données émises par les diodes infrarouge du boitier de télécommande. A cet effet, on utilise des diodes infrarouge D5, D6 disposées par exemple selon un angle de 90° pour augmenter l'angle solide dans lequel l'émission infrarouge codée est efficace.

La trame de 32 bits se décompose en 4 bits de synchronisation, 24 bits d'un code d'identification secret correspondant au code mémorisé dans la centrale fixe 5 du dispositif antivol, et 4 bits d'actionnement d'éléments fonctionnels activés en fonction de la touche T1 à T4 enfoncée. Les quatre circuits intégrés U1 à U4 sont branchés en anneau de façon à transmettre des trames de 32 bits en continu, pendant tout le temps où une touche T1 à T4 est actionnée. Il est à noter que l'utilisation d'un code personalisé unique de 24 bits plus 4 bits d'actionnement des éléments fonctionnels permet environ 128 millions de codes différents, ce qui rend difficile la détection du code particulier utilisé.

Le chargement des 32 bits dans les circuits intégrés se fait de préférence après un certain délai, créé grâce à un Trigger de Schmitt 36 (R33 et C2), permettant la stabilisation de l'alimentation des circuits intégrés avant l'enregistrement des 32 bits à envoyer.

Le boitier de télécommande 3 comporte encore un ensemble 37 de plusieurs composants discrets, connectés de façon connue en soi pour générer aux bornes des diodes infrarouge D5, D6 un signal infrarouge correctement mis en forme et représentant la trame codée de 32 bits mentionnée précédemment. En particulier, en sortie des registres à décalage U11 à U4, la trame de 32 bits avant mise en forme attaque un Trigger de Schmitt 38 (R34,C3), suivi de diviseurs par 16 (39,40) disposés série, pour la division par 256 d'un signal d'horloge fourni par le circuit 41. A chaque remise à zéro des diviseurs, la trame de 32 bits est décalée d'un bit, de sorte que le prochain bit de la séquence codée est transmis aux transistors Q1, Q2 et aux diodes D5, D6 pour émission.

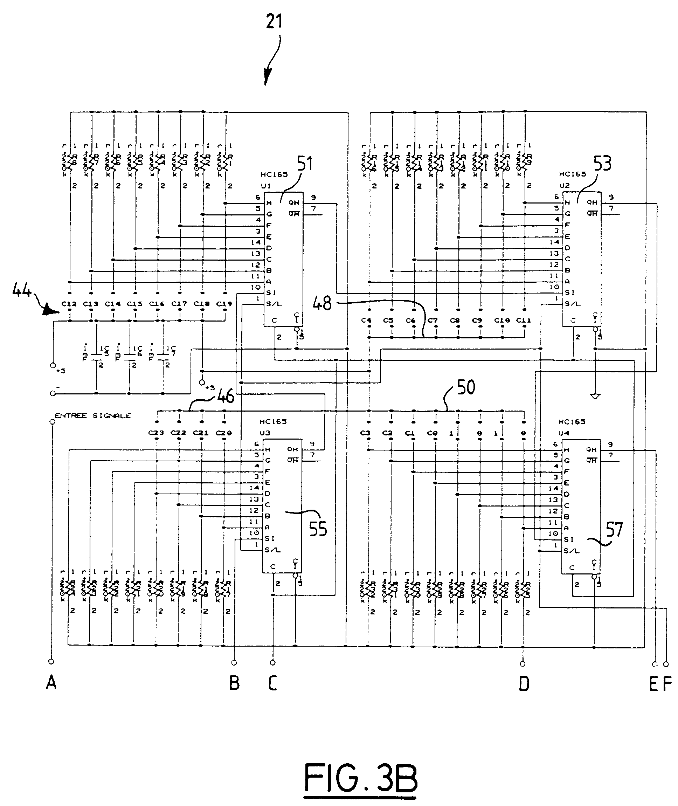

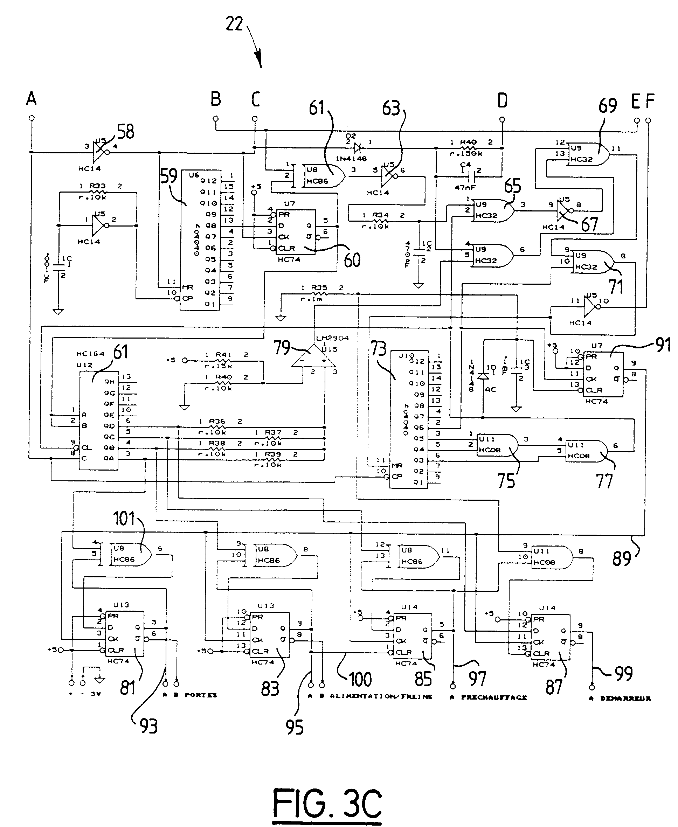

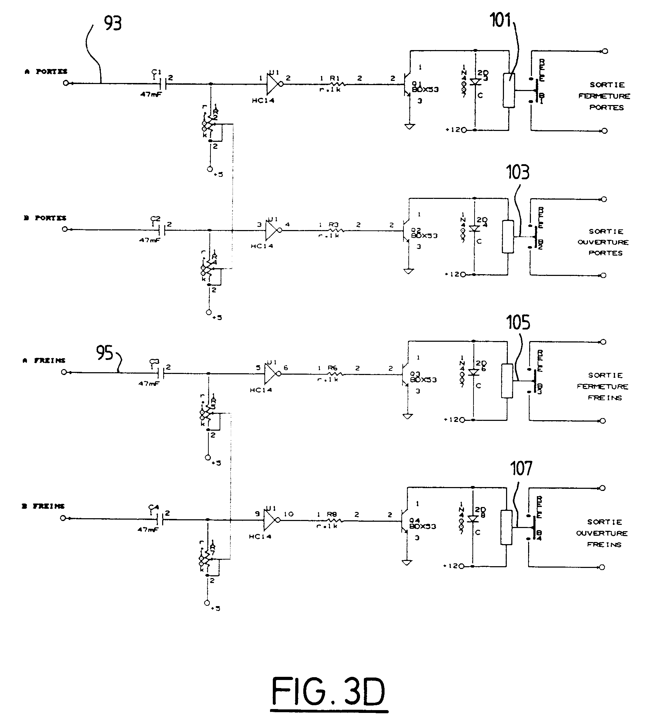

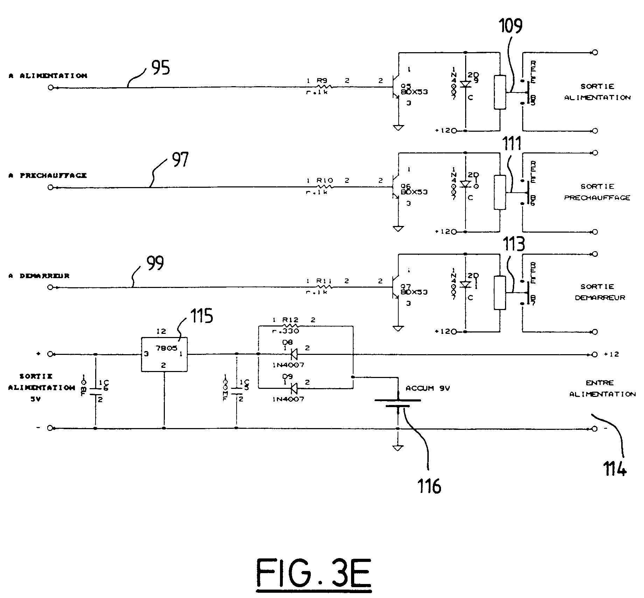

On va maintenant décrire les éléments de la centrale fixe 5 du dispositif électronique antivol selon l'invention. Ces éléments sont répartis sur les figures 3A, 3B, 3C,3D et 3E, qui sont liées entre elles.

La figure 3A représente le schéma électrique du récepteur infrarouge 7. Ce récepteur comporte de façon classique une diode de réception infrarouge D7, du type BP104, connectée à un préamplificateur de lumière infrarouge 42, constitué par un circuit intégré du type SL486 amplifiant les signaux utiles et éliminant par filtrage les signaux parasites gênants. A cet effet, le circuit 42 est pourvu sur ses entrées d'un ensemble de composants incluant des résistances et des condensateurs dont les valeurs sont calculées par l'homme du métier pour obtenir un filtrage du signal d'entrée dans la plage voulue, en ne laissant passer que la plage utile du signal carré porteur de la séquence de bits codée. Le circuit 42 délivre sur sa sortie OUT 43 un signal électrique filtré et mis en forme, représentatif du signal série infrarouge reçu. Ce signal est transmis par le câble 26 (figure 1) aux étages électroniques 21,22 de stockage et décodage de code de la centrale 5 du dispositif antivol.

Ces étages 21,22 sont représentés aux figures 3B et 3C. La partie représentée à la figure 3B représente les circuits pour désérialiser et stocker le code de 32 bits introduit lors de la personnalisation de chaque centrale fixe avec un code unique dédié au dispositif antivol considéré. Ce codage est fait en usine, où les bits du code sont fournis en parallèle au niveau de barrettes de court-circuit 44,46,48,50. Les bits du code sont alors sérialisés par quatre registres à décalage 51,53,55,57, de huit bits chacun (du type 74HC165). Ces registres à décalage sont à nouveau pourvus de composants externes de polarisation et de filtrage de leur alimentation, sous la forme de résistances et de condensaturs de valeurs appropriées, tel que connu en soi.

A noter que les connexions avec les circuits de la figure 3C se font à des points A,B,C,D,E, et F, correspondant aux signaux suivants:
A: signal d'entrée série issu du récepteur infrarouge 7.
B: entrée série du dernier registre à décalage, qui, connectée à la sortie du premier registre, permet d'avoir une circulation en continu de la trame de 32 bits du code entre les registres à décalage, au fins de comparaison avec le code entrant provenant du récepteur infra-rouge.
C: entrée d'horloge des quatre registres à décalage 51,53,55,57.
D: connexion de masse.
E: sortie du code série de référence sur 32 bits.
F: commande de décalage/chargement des données ("0" pour charger, "1" pour décaler)

On se réfère maintenant à la figure 3C correspondant au circuit 22 de la figure 1. Les circuits représentés servent principalement à la comparaison du code de référence ou d'identification de la centrale fixe 5 et du code transmis par le boitier de télécommande 3, et à la génération de commandes d'actionnement ou d'inhibition d'ensembles fonctionnels du véhicule, en fonction du résultat de cette comparaison.

De façon plus détaillée, le signal en provenance du récepteur infrarouge disponible en A est transmis après inversion en 58 à un compteur 59 et à une bascule 60. La sortie de la bascule 60 est fournie à un registre à décalage 61 monté en convertisseur série-parallèle qui permet d'isoler à sa sortie les 4 bits correspondant aux quatres touches T1 à T4 du boitier de télécommande. La sortie de la bascule 60 alimente également une porte OU 61 recevant sur son autre entrée les bits successifs du code de référence, de façon à comparer bit à bit le code de référence et le code reçu du boitier de télécommande. Chaque correspondance de deux bits est transmise à un ensemble de portes logiques 63,65,67,69,71 et provoque en dernier lieu l'incrémentation d'un compteur 73 à chaque coïncidence entre deux bits consécutifs de code. Le comptage se fait sur 32 bits, soit 28 premiers bits correspondant au code d'identification secret, et 4 bits d'actionnement correspondant chacun au bit de commande issu d'une des touches T1 à T4 du boitier de télécommande 3.

Des portes ET 75,77 provoquent la remise à zéro du comptage après une séquence de 32 bits, ou à chaque discordance entre deux bits du code de référence et du code d'accès envoyé par le boitier de télécommande (ou une source parasite éventuelle).

Par ailleurs, les sorties Qa, Qb, Qc et Qd du registre à décalage 61 sont fournies à un comparateur 79 qui provoque la remise à zéro du comptage et des comparaisons bit à bit, dans le cas où deux desdites sorties Qa à Qd seraient simultanément à l'état "1", signalant l'appui simultané de deux touches parmi les touches T1 à T4 du boitier de télécommande.

A noter que des variantes de réalisation peuvent aisément prévoir des moyens de remise à zéro du comptage si les touches T1 à T4 ne sont pas actionnées et décodées selon une séquence prédéterminée choisie par le fabricant, ou avec une certaine temporisation entre les touches ou sur une touche donnée.

Les données de Qa, Qb, Qc et Qd sont ensuite transmises en entrée à un ensemble de bascules 81,83,85,87 recevant par ailleurs un signal de validation en 89, issu d'une bascule 91 recevant en entrée la sortie du compteur 73. Ainsi, le signal de validation est envoyé aux bascules 81 à 87 uniquement si le comptage a atteint la valeur 32, signifiant que tous les 28 bits du code d'identification ont valablement étés reçus par la centrale fixe 5 du système antivol, et que la commande sur 4 bits des principaux éléments fonctionnels du véhicule a elle aussi été valablement transmise.

La sortie de la bascule 83 est reliée par une connexion 100 à l'entrée de remise à zéro de la bascule 85. Ainsi, la fonction commandée par la bascule 85 ne pourra être activée que si la fonction commandée par la bascule 83 est déjà activée, ce qui permet d'introduire un ordre ou une séquence prédéterminée selon laquelle les touches 4 doivent être actionnées.

Une porte NAND 101 peut être disposée entre l'entrée et la sortie de chaque bascule 81 à 87, de façon à pouvoir commander les éléments fonctionnels du véhicule soit par des niveaux hauts ou des niveaux bas, en fonction des exigences du constructeur du véhicule.

Les sorties 93, 95, 97 et 99 des bascules respectives 81, 83, 85 et 87 sont alors disposées en série dans les circuits d'alimentation électrique de tous les éléments fonctionnels du véhicule dont on souhaite contrôler le fonctionnement.

On se réfère aux figures 3D et 3E, ou on a représenté l'utilisation des signaux de sortie des bascules 81,83,85,87 de la figure 3C. Dans l'exemple représenté, la sortie 93 de la bascule 81 est placée dans le circuit d'alimentation des relais 101,103 d'ouverture/fermeture des portières du véhicule, de sorte que les portières s'ouvrent lorsque l'appui de la touche T1 du boitier de télécommande 3 est décodée par la centrale fixe 5 du dispositif. De façon analogue, la sortie 95 de la bascule 83 est placée en série avec le circuit d'alimentation des freins et attaque des relais 105,107 de sorte que les freins restent bloqués tant que la touche T2 du boitier 3 n'a pas été appuyée et décodée. Enfin, comme représenté dans la figure 3E, les sorties 95,97,99 des bascules 83,85 et 87 sont connectées dans les circuits d'alimentation générale, d'alimentation du préchauffage de carburant et du démarreur, ou de tout autre élément fonctionnel du véhicule pouvant être utilisé pour empêcher l'utilisation non autorisée de celui-ci.

Les signaux de commande issus des bascules 83,85,87 attaquent des relais 109,111,113 qui permettent de commander plusieurs dizaines d'Ampères. Dans la figure 3D, les commandes d'ouverture ou de fermeture des portes ou d'actionnement des freins sont impulsionelles, d'une durée fonction des composants C1,C2,R2,R4 (pour les portes) et C3,C4, R5 et R7 pour les freins.

Dans la figure 3E, les commandes d'actionnement de l'alimentation générale et de préchauffage sont monostables, et celle du démarreur provoque l'actionnement de ce dernier tant que la touche correspondante (T4) du boitier de télécommande reste appuyée.

On a encore représenté dans la figure 3E une alimentation électrique 114 de 12 Volts régulée en tension par un régulateur 115, ainsi qu'une batterie de secours 116 de 9 Volts qui prend le relais de l'alimentation 112 le cas échéant.

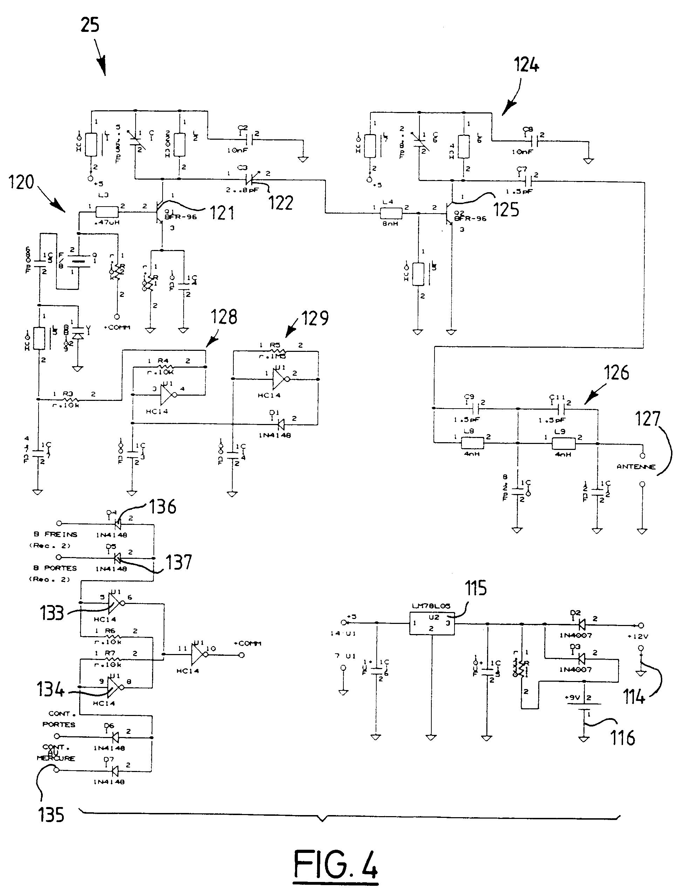

La figure 4 représente un mode de réalisation d'une balise radiofréquence 25 (figure 1) dont est pourvue la centrale 5 du dispositif électronique antivol selon l'invention.

Cette balise 25 comporte un oscillateur connu en soi, globalement repéré par 120. Le signal de sortie est prélevé sur le collecteur du transistor 121 puis dirigé à travers le condensateur 122 vers l'amplificateur sélectif repéré par 124 travaillant dans la bande voisine de 400 MHz. Le signal à cette fréquence est prélevé sur le collecteur du transistor 125 puis attaque un filtre 126 de sortie, où il est transmis à l'antenne 127 sous la forme d'un signal de 0.5 mW environ. Le signal porteur à 400 Mhz est modulé en fréquence par deux Trigger de Schmitt 128,129 assemblés de façon à créer un signal de modulation de 1 KHz toutes les 0.5 seconde. La balise 25 est alimentée par la tension de batterie 114 du véhicule (12V) et la batterie tampon 116 de sécurité de 9 V au cas où la batterie 12V serait débranchée. L'alimentation se fait à travers le régulateur de tension 115 d'alimentation à 5V.

La mise en route de la balise 25 s'effectue par l'intermédiaire de deux Trigger de Schmitt 133,134 assemblés en bascule active dès lors que la balise reçoit une impulsion négative de la part d'un déclencheur. Le déclencheur utilisé est notamment un contact à mercure 135 qui se ferme en cas de soulèvement du véhicule, ou un contact d'ouverture de portière ou analogue. L'arrêt d'émission de la balise 25 se fait par sélection simultanée des touches T1 et T2 du boitier de télécommande, cette sélection étant décodée à travers les diodes 136 et 137.

Selon une variante de la balise décrite ci-dessus, un circuit de réception radio est également fourni, et couplé à un dispositif de signalisation du véhicule, par exemple ses feux de position. Dans ce cas, de petits émetteurs correspondants utilisés par les forces de l'ordre permettront d'activer les feux de position du véhicule volé et ainsi faciliter son repérage.

Bien entendu, le dispositif électronique antivol selon l'invention n'est pas limité par le mode de réalisation détaillé décrit, et les fonctions réalisées par l'invention pourraient être réalisées à l'aide de circuits ou de composants différents, sans pour autant sortir du cadre défini par la présente invention. En particulier, les circuits décrits, à base de composants discrets, pourraient aussi bien être réalisés par un micro-contrôleur intégré regroupant l'essentiel des fonctions électroniques, ou à l'aide de circuits intégrés spécifiques à l'application ou ASIC ("Application Specific Integrated Circuit"), sans se départir du concept inventif exposé. En particulier, l'utilisation d'une centrale 5 utilisant un microcontrôleur (par exemple un ST62T10 de SGS-Thomson) permet de programmer une fois pour toutes le code d'identification du dispositif, puis de bloquer définitivement par logiciel l'accès ultérieur au code stocké à des fins de piratage.

En outre, selon une autre variante du dispositif, les sorties des bascules de commande attaquant les éléments fonctionnels du véhicule peuvent être connectées à des borniers aléatoires (non représentés). Ainsi, sur deux unités distinctes du dispositif antivol selon l'invention, les bascules de sortie commanderont des éléments fonctionnels différents d'un véhicule à l'autre. Par exemple, la bascule commandant l'alimentation générale sur un premier véhicule, serait câblée sur un second véhicule de manière à commander le démarreur, rendant impossible tout apprentissage des connections à des fins de piratage.

Selon une autre variante de la centrale électronique 5, celle-ci est équipée pour fournir sur certaines de ses sorties de commande une tension plus faible que les 12V classiques de la batterie du véhicule. Ainsi, la connexion par un voleur de la tension de batterie sur un élément fonctionnel (démarreur etc...) en amont de la centrale aurait pour effet de griller la centrale ou des fusibles, immobilisant ainsi le véhicule.

Le dispositif antivol 1 qui vient d'être décrit fonctionne et est utilisé de la manière suivante. L'appui sur une touche T1 à T4 du boitier de télécommande provoque l'émission en continu d'un code infrarouge comportant 28 bits de code d'identification correspondant à un code secret mémorisé une fois pour toutes dans des moyens de stockage de la centrale fixe 5 du dispositif antivol, et 4 bits d'actionnement correspondant au code de la touche particulière enfoncée. Le simple relâchement de la touche considérée arrête l'émission du code infrarouge. De cette façon, le boitier de télécommande 3 ne consommera du courant éléctrique qu'en phase d'émission, c'est à dire pendant de faibles intervalles de temps.

L'appui sur la touche T1 provoque l'envoi à la centrale électronique 5 du code secret de 28 bits et du code de la touche T1, ce qui permet l'ouverture des portes du véhicule, si celui-ci est pourvu d'un dispositif électromécanique d'ouverture des portes, connu en soi. Une fois dans l'habitacle, le conducteur positionne le boitier 3 dans le réceptacle 4. L'appui de T2 à cet instant met à disposition l'alimentation générale du véhicule, mais l'appui sur T3 ou T4 n'a aucun effet, puisque le contact magnétique 31 permet d'inhiber le fonctionnement des touches T3, T4 tant que le boitier de télécommande 3 n'est pas positionné sur son réceptacle dans l'habitacle de la voiture. En conséquence, il est impossible de démarrer le véhicule par l'extérieur ou en pénétrant par la force dans l'habitacle pour y court-circuiter des fils électriques du démarreur.

Si le véhicule est équipé d'un verrouillage de direction du type "Neyman", le conducteur actionne la clé de contact du véhicule, ce qui a pour effet d'alimenter la centrale 5 en électricité. Il est à noter que dans des véhicules dépourvus de "Neyman", il n'est pas nécessaire d'actionner la clé de contact, qui devient de ce fait inutile et pourrait être supprimée.
Dès que la centrale 5 est alimentée, l'appui des touches T2,T3,T4 provoque l'actionnement des éléments fonctionnels correspondants, et notamment l'actionnement du démarreur par T4. Il est à noter qu'à partir de ce moment, on pourrait retirer le boitier 3 de son réceptacle, sans incidence sur le fonctionnement du véhicule, mais il vaut mieux laisser le boitier à sa place, de sorte que si le moteur venait à caler, on pourrait immédiatement redémarrer en appuyant sur T4. Dans les véhicules avec clé de contact et "Neyman", le retrait de la clé déconnecte la centrale 5, et dès lors le véhicule est inutilisable, même si le boitier 3 reste en place.

On observe donc que le dispositif électronique antivol décrit ci-dessus atteint son but et propose de nombreux avantages déterminants par rapport aux dispositifs connus, et une grande adaptibilité aux types de véhicules et à leur niveau d'équipement.

Seule l'utilisation du boitier de télécommande correspondant à la centrale fixe 5 installée dans le véhicule protégé permet successivement d'ouvrir les portières et capots du véhicule (si celui-ci est pourvu de dispositifs électriques d'ouverture des portes, ce qui n'est nullement indispensable pour le fonctionnement des autres éléments fonctionnels), puis d'actionner, éventuellement dans une séquence prédéterminée, les ensembles fonctionnels du véhicule. La multiplication des ensembles fonctionnels cablés sur le dispositif antivol et leur commande à l'aide de codes différents au moins en partie (4 derniers bits sur 32), permettent d'augmenter la difficulté de contournement du dispositif jusqu'à un seuil intolérable pour la plupart des voleurs.

## Revendications

1. Dispositif électronique antivol (1) pour véhicule automobile disposant d'éléments fonctionnels autorisant le contrôle du fonctionnement du véhicule, à savoir notamment une batterie d'accumulateurs électriques pour l'alimentation électrique générale du véhicule, un démarreur électrique et des freins, caractérisé en ce qu'il comporte:
- un boitier de télécommande (3) pour l'émission d'un code numérique porté notamment par un faisceau infrarouge, ledit boitier de télécommande coopérant avec un réceptacle (4) disposé dans l'habitacle du véhicule de telle manière que ledit code numérique n'est émis que si e boitier de télécommande est disposé dans le réceptacle;
- une centrale électronique (5) comportant en entrée des moyens de réception (7) dudit code numérique, et reliée en sortie à un ou plusieurs desdits éléments fonctionnels de façon à contrôler leur fonctionnement en cas de réception dudit code numérique.

2. Dispositif électronique antivol (1) selon la revendication 1, caractérisé en ce que ledit réceptacle comporte des moyens (19) de commande de fermeture d'un contact électrique (31) du boitier de télécommande (3) lors du positionnement dudit boitier de télécommande dans ledit réceptacle (4), ledit contact électrique étant disposé dans les circuits électriques (17) du boitier de télécommande de façon à empêcher l'émission dudit code numérique tant que ledit contact électrique (31) est ouvert.

3. Dispositif électronique antivol (1) selon la revendication 2, caractérisé en ce que lesdits moyens (19) de commande de fermeture d'un contact électrique (31) sont constitués par un dispositif magnétique, notamment un aimant permanent (19) disposé à proximité du réceptacle, notamment sous la base de celui-ci, et en ce que ledit contact électrique (31) est un contact électromagnétique qui se ferme sous l'effet dudit dispositif magnétique lorsque le boitier de télécommande est positionné dans le réceptacle.

4. Dispositif électronique antivol (1) selon l'une quelconque des revendications précédentes, caractérisé en ce que ledit boitier de télécommande comporte des moyens d'émission infrarouge (D5,D6) dudit code numérique par actionnement d'un ensemble de touches (T1,T2,T3,T4) de contact disposées sur ledit boitier (3), l'une (T1) desdites touches de contact contrôlant l'activation d'un premier élément fonctionnel du véhicule, notamment le verrouillage/déverrouillage des portes du véhicule par transmission et décodage dudit code numérique, et l'actionnement d'au moins une des autres touches (T2,T3,T4) commandant l'actionnement d'une pluralité d'autres éléments fonctionnels du véhicule, dès lors que ledit boitier de télécommande mobile (3) est disposé dans son réceptacle (4).

5. Dispositif électronique antivol (1) selon l'une quelconque des revendications précédentes, caractérisé en ce que le boitier de télécommande (3) est positionné dans le réceptacle (4) de façon à ce que lesdits moyens d'émission infrarouge (D5,D6) soient en vue directe desdits moyens de réception (7).

6. Dispositif électronique antivol (1) selon l'une quelconque des revendications précédentes, caractérisé en ce qu'il comporte des moyens réflecteurs (20) du faisceau infrarouge émis par le boitier de télécommande, ces moyens réflecteurs assurant la réflexion du faisceau infrarouge selon une multitude de trajectoires (T), et lesdits moyens de réception (7) étant disposés à l'intersection de l'une quelconque de ces trajectoires pour recevoir de façon indirecte le faisceau émis.

7. Dispositif électronique antivol (1) selon la revendication 6, caractérisé en ce que lesdits moyens réflecteurs sont constitués par une bille cylindrique réfléchissante (20) disposée sur le réceptacle (4), en vue directe du faisceau infrarouge émis par le boitier de télécommande (3).

8. Dispositif électronique antivol selon l'une quelconque des revendications précedentes, caractérisé en ce qu'un code numérique est transmis lors de l'actionnement d'une touche de contact (T1,T2,T3,T4) quelconque dudit boitier, ce code comportant un premier ensemble de bits d'identification secrets personalisés pour un dispositif électronique antivol (1) déterminé, et un second ensemble de bits d'actionnement représentatif de la touche de contact particulière actionnée et correspondant à un ou plusieurs éléments fonctionnels particuliers du véhicule.

9. Dispositif électronique antivol (1) selon la revendication 8, caractérisé en ce que ladite centrale (5) comporte des moyens (100) pour fixer une séquence prédéterminée d'actionnement des éléments fonctionnels du véhicule et des moyens pour comparer l'ordre d'actionnement des touches de contact du boitier (3) à cette séquence prédéterminée, lesdits éléments fonctionnels étant actionnés par la centrale (5) uniquement si l'ordre d'actionnement des touches correspond à la séquence prédéterminée.

10. Dispositif électronique antivol (1) selon la revendication 9, caractérisé en ce que lesdites autres touches provoquent l'actionnement des circuits électroniques (83,105,107) de commande de déblocage des freins du véhicule, des circuits (83,109) de commande de fermeture du circuit électrique général du véhicule, des circuits (87,113) de commande de démarreur du véhicule, ou des circuits de commande d'ouverture d'électrovanne de carburant.

11. Dispositif électronique antivol selon l'une quelconque des revendications précedentes, caractérisé en ce que ladite centrale électronique (5) comporte:
- un circuit (7) de réception et de pré-amplification de faisceau infrarouge, attaquant des circuits de décodage (22) du code d'accès transmis par le boitier de télécommande (3);
- un circuit (21) de stockage d'un code de d'identification personalisé affecté au dispositif antivol considéré;
- des moyens de comparaison (79) connectés audit circuit de décodage (22) et audit circuit de stockage (21), de manière à comparer ledit code personalisé avec celui enregistré dans ledit circuit de stockage, et ne libérer la séquence des opérations ultérieures de commande du dispositif antivol électronique qu'en cas de coïncidence de ladite comparaison;
- des circuits de bascules (81,83,85,87) générant des commandes d'actionnement lorsque ladite comparaison est positive, lesdites commandes d'actionnement étant transmises aux éléments fonctionnels correspondants du véhicule par l'intermédiaire de relais électriques (101,103,105,107,109,111,113) disposés dans les circuits d'alimentation desdits éléments fonctionnels.

12. Dispositif électronique antivol selon la revendication 11, caractérisé en ce que lesdits circuits (21) de stockage du code d'accès comprennent des premiers circuits logiques (51,53,55,57) à registres à décalage disposés en anneau, et en ce que lesdits circuits de décodage (22) comprennent des seconds circuits logiques (61) à registres à décalage pour le décodage des bits d'actionnement des éléments fonctionnels, le décodage des bits d'identification n'étant autorisé que si le bon code d'accès à été décodé.

13. Dispositif électronique antivol selon l'une quelconque des revendications précédentes, caractérisé en ce qu'il comprend en outre:
- une balise radioélectrique (25) placée dans ledit véhicule et pourvue de moyens (133,134,135) de déclenchement d'émission de la balise en cas d'intrusion forcée dans le véhicule, notamment par ouverture forcée des portes, du coffre ou du capot moteur du véhicule, ou par soulèvement de celui-ci;
- des moyens (136,137), placés dans ledit boitier de télécommande pour neutraliser le fonctionnement de ladite balise radioélectrique lors de l'envoi de ladite commande d'ouverture des portes, notamment en utilisant un interrupteur à mercure (135).

14. Dispositif électronique antivol selon l'une quelconque des revendications précédentes, caractérisé en ce que ladite balise (25) comporte en outre des circuits de réception radiofréquence, le signal émis ou reçu utilisant une onde porteuse dont la fréquence est située dans une gamme de fréquences utilisée par les organismes de contrôle routier, de façon à faciliter le repérage par ces derniers d'un véhicule volé.
